(19) Europäisches Patentamt / European Patent Office / Office européen des brevets

(11) **EP 2 590 065 A1**

(12) **EUROPEAN PATENT APPLICATION**

(43) Date of publication:
**08.05.2013 Bulletin 2013/19**

(51) Int Cl.:
***G06F 3/0488*** *(2013.01)*

(21) Application number: **12152323.7**

(22) Date of filing: **24.01.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.11.2011 DE 102011117788**

(71) Applicant: **Johnson Controls Automotive
Electronics GmbH
75196 Remchingen (DE)**

(72) Inventors:
• **Atanasov, Daniel
1309 Sofia (BG)**
• **Aleksandrov, Marin
1404 Sofia (BG)**

(74) Representative: **Liedtke, Markus
Liedtke & Partner
Patentanwälte
Elisabethstraße 10
99096 Erfurt (DE)**

(54) **Method for controlling a touch sensitive display device**

(57)    The invention relates to a method for controlling a touch sensitive display device, whereby a touch input of a user is detected and/or processed. Thereby at least a first position ($P_1$) and a second position ($P_2$) of segments ($S_1$, $S_2$) are detected sequentially, whereby a geometrical transformation in a coordinate system (C) is determined, by which the first position ($P_1$) of a first segment ($S_1$) is imaged on the second position ($P_2$) of a second segment ($S_2$), and whereby the geometrical transformation is transmitted to a user interface.

FIG 1

EP 2 590 065 A1

## Description

The invention relates to a method for controlling a touch sensitive display device according to the preamble of claim 1.

Touch sensitive display devices are already known from prior art. For controlling and operating such devices are many gestures known that correspond to a relative movement of one or more fingers of the user as the fingers are moved along a surface of the touch sensitive display device. Alternatively, gestures can be realized with a stylus. The operations can include paging, scrolling, panning, zooming, turning, etc. For example, the user makes a selection on the display device by pointing directly to objects displayed on the display device. Further examples are, the user moves two fingers away from each other to realize a zoom in, by which the horizontal and vertical scales of the display device were increased, or the user performs a turning motion with the thumb and the index finger. In particular, the latter is important for user friendliness, because two or more simultaneous contacts (by two or more fingers) have to be recognized by the display device.

US 2008/0165255 A1 describes a system, method, and software for implementing gestures with a device having one or more touch sensitive services for operating the device, configuring the operation of the device and remotely controlling another device. The device detects a roll, determines a parameter of the roll and performs an operation relating to the device or the other device based on the determined parameter. The touch sensitive surface of the device can be positioned on the device to enable a set of gestures for configuring the operation of the device, for operating the device and for enabling additional gestures for operating the device.

It is an object of the present invention to provide a method for controlling a touch sensitive display device, by which user friendliness is improved according to prior art.

The object is achieved by a method according to claim 1.

Preferred embodiments of the invention are given in the dependent claims.

A method for controlling a touch sensitive display device comprises that a touch input of a user on a surface of the display device is detected and/or processed. According to the invention at least a first position and a second position of segments are detected sequentially, whereby a geometrical transformation in a coordinate system is determined, by which the first position of a first segment is imaged on the second position of a second segment, and whereby the geometrical transformation is transmitted to a user interface. Thereby, an input of a user on a surface of a touch sensitive display device is recognized as a two dimensional transformation matrix that allows a substantially correct recognition of the touch input. The touch input describes a relative movement of one or more fingers of the user for realizing a zoom, rotation, and translation etc. of an object displayed on the display device. The calculation with matrices is well known and can be performed in an easy and convenient way. Moreover, the method is applicable on many different user interfaces.

In a preferred embodiment, the geometrical transformation is decomposed in a product of at least four transformation matrices.

A first transformation matrix is defined as a translation matrix which is applied to the first segment. Thereby, the first segment is translated to a coordinate origin of the coordinate system. This allows further calculations as well as rotation and/or scaling to be performed in an easy way.

A second transformation matrix is defined as a rotation matrix which is applied to the translated first segment. In a preferred embodiment the translated first segment is rotated in such a manner, that it is parallel to the touch segment retained in the second position.

A third transformation matrix is defined as a scale matrix which is applied to the rotated touch segment. In a preferred embodiment the rotated first segment is scaled in such a manner that it is equal in size to the second segment.

A fourth transformation matrix is defined as a further translation matrix which is applied to the scaled first segment. In a preferred embodiment the scaled first segment is translated in such a manner that it is substantially identical with the second segment.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

Brief Description of the Drawings

The present invention will become more fully understood from the detailed description given hereinbelow and the accompanying drawings which are given by way of illustration only, and thus, are not limitive of the present invention, and wherein:

Figure 1 shows two segments in a in a planar coordinate system, that indicates a user touch input on a display device in accordance with an exemplary embodiment of the invention,

Figure 2    shows the coordinate system in accordance to figure 1, whereby the segments comprise transformed coordinates.

Corresponding parts are marked with the same reference symbols in all figures.

Detailed Description of Preferred Embodiments

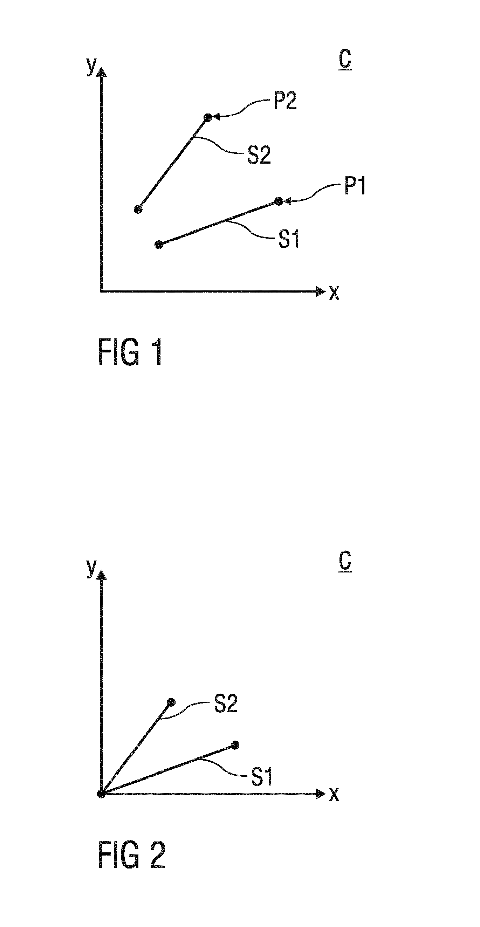

**Figure 1** show two segments $S_1$ and $S_2$ in a planar coordinate system C with a abscissa x and ordinate y, whereby the two segments $S_1$ and $S_2$ indicates a user touch input on a screen of a display device performed in accordance with an exemplary embodiment of the invention.

In the present embodiment of the invention, the display device is configured as an input and/or output display device for operating an electrical device that preferably comprises a touch sensitive screen, preferably a so called multi touch screen. For example, the display device can be integrated into a personal computer system, such as desktop, laptop, tablet or hand-held computer. Further, the display device can be also integrated into a computing device, such as a cell phone, PDA, dedicated media player (e.g. MP3 player), consumer electronic device, and the like.

With the display device it is possible to recognize multiple simultaneous touches of the screen by a user, e.g. with his fingers. Therefore, the display device displays a graphical user interface (GUI) that provides a user interface between the user and the display device. The GUI can represent applications and/or information in the form of programs, files, non interactive text and operational options with graphical images, objects, or vector representations. The user can tap on displayed information and/or graphical images, such as buttons, windows, icons, etc., displayed on the screen, moving them anyway and/or select several at the same time.

The display device recognizes touches, as well as the position and magnitude of touches on the touch screen. The touches are detected by well known sensing technologies and reported to a control unit, e.g. a processor, coupled to the display device. The control unit transforms the touches and analyze them for performing a required action.

In the present embodiment, a user touches the screen of the display device with two fingers simultaneously and translates them over the screen in the direction of the fingers. This can be compared with a panning gesture.

Two simultaneous touches define a first segment $S_1$, in the present embodiment defined as a first line segment $A_1$ to $B_1$, whereby one of the touches, for example performed by a user's thumb, is described with the coordinate parameters $A_1,X$, $A_1,Y$ and the other touch, for example performed by the index finger of the user, is described with the coordinate parameters $B_1,X$, $B_1,Y$. The coordinate parameters $A_1,X$, $A_1,Y$, $B_1,X$, $B_1,Y$ define a first position of the user's fingers.

As soon as the position of the first line segment $A_1$ to $B_1$ changes relative to the first position, the first line segment $A_1$ to $B_1$ changes in size, orientation and position into the second segment $S_2$, in the present embodiment defined as a second line segment $A_2$ to $B_2$. With other words: The first line segment $A_1$ to $B_1$ is transformed into the second line segment $A_2$ to $B_2$.

In a two dimensional geometry such transformation is described with a transformation matrix [Mt]. This issue can be expressed in following equation:

$$[A_2 \text{ to } B_2] = [Mt] * [A_1 \text{ to } B_1] \qquad\qquad [1].$$

The transformation matrix [Mt] is a product of four transformation matrices $[T_2]$, [R], [S], $[T_1]$:

$$[Mt] = [T_2] * [R] * [S] * [T_1] \qquad\qquad [2].$$

The four transformation matrices $[T_2]$, [R], [S], $[T_1]$ are matrices, by which the first line segment $A_1$ to $B_1$ is imaged on the second line segment $A_2$ to $B_2$.

Thereby, a first transformation matrix $[T_1]$ is defined as a translation matrix that needs to be applied to the first line segment $A_1$ to $B_1$ in such a manner that the first line segment $A_1$ to $B_1$ is translated to the coordinate origin (0,0).

A second transformation matrix [R] is defined as a rotation matrix that needs to be applied to the translated first line segment $A_1$ to $B_1$, so that it becomes parallel to the second line segment $A_2$ to $B_2$.

A third transformation matrix [S] is defined as a scale matrix that needs to be applied to the rotated segment $A_1$ to $B_1$ so it becomes equal in size to the second line segment $A_2$ to $B_2$.

A fourth transformation matrix [T_2] is a further translation matrix that needs to be applied to the scaled segment $A_1$ to $B_1$ so it becomes identical to the second line segment $A_2$ to $B_2$.

For solution of the abovementioned equation [1], [2] is inserted into so that following applies:

$$[A_2 \text{ to } B_2] = [T_2] * [R] * [S] * [T_1] * [A_1 \text{ to } B_1] \tag{3}.$$

As opposed to the second and third transformation matrices [R] and [S], the first and fourth transformation matrices [T_1] and [T_2] are no linear maps so that all transformation matrices [T_2], [R], [S], [T_1] are defined as 3x3 matrices, whereby the first transformation matrix [T_1] is defined as:

$$[T_1] = \begin{bmatrix} 1 & 0 & -A_1 x \\ 0 & 1 & -A_1 y \\ 0 & 0 & 1 \end{bmatrix},$$

and the fourth transformation matrix [T_2] is defined as:

$$[T_2] = \begin{bmatrix} 1 & 0 & A_2 x \\ 0 & 1 & A_2 y \\ 0 & 0 & 1 \end{bmatrix}.$$

For an easier calculation the equation [3] is multiplied with the invert matrix $[T_2]^{-1}$ of the fourth transformation matrix [T_2]. Following equation results:

$$[T_2]^{-1} * [A_2 \text{ } to \text{ } B_2] = [R] * [S] * [T_1] * [A_1 \text{ } to \text{ } B_1] \tag{4},$$

whereby the invert matrix $[T_2]^{-1}$ is defined as:

$$[T_2]^{-1} = \begin{bmatrix} 1 & 0 & -A_2 x \\ 0 & 1 & -A_2 y \\ 0 & 0 & 1 \end{bmatrix}.$$

The left term of the equation [4]: $[T_2]^{-1} * [A_2 \text{ to } B_2]$ results in a segment from the coordinate origin (0,0) to:

$$B_2 X - A_2 X = u \text{ and } B_2 Y - A_2 Y = v \tag{5.1}.$$

The part of the right term of the equation [4]: $[T_1] * [A_1$ to $B_1]$ results in a segment from the coordinate origin (0,0) to:

$$B_1X - A_1X = x \text{ and } B_1Y - A_1Y = y \qquad [5.2].$$

The parameters u, v and x, y are illustrated in figure 2.

For calculation, the parameters x, y and u, v are expressed as vectors respectively and inserted into the equation [4] so that following results:

$$\begin{bmatrix} u \\ v \\ 1 \end{bmatrix} = [R] * [S] * \begin{bmatrix} x \\ y \\ 1 \end{bmatrix} \qquad [6].$$

Thereby, the second transformation matrix [R] is defined as:

$$[R] = \begin{bmatrix} \cos(\theta) & \sin(\theta) & 0 \\ -\sin(\theta) & \cos(\theta) & 0 \\ 0 & 0 & 1 \end{bmatrix},$$

and the third transformation matrix [S] is defined as:

$$[S] = \begin{bmatrix} S & 0 & 0 \\ 0 & S & 0 \\ 0 & 0 & 1 \end{bmatrix}.$$

Then applies:

$$\begin{bmatrix} u \\ v \\ 1 \end{bmatrix} = \begin{bmatrix} S*\cos(\theta) & S*\sin(\theta) & 0 \\ -S*\sin(\theta) & S*\cos(\theta) & 0 \\ 0 & 0 & 1 \end{bmatrix} * \begin{bmatrix} x \\ y \\ 1 \end{bmatrix} \qquad [7].$$

For an easier calculation the term S * cos(θ) is substituted with a parameter a, and the term S * sin(θ) is substituted with a parameter b.

In accordance with the equation [7] following reveals:

$$\begin{bmatrix} u \\ v \\ 1 \end{bmatrix} = \begin{bmatrix} a & b & 0 \\ -b & a & 0 \\ 0 & 0 & 1 \end{bmatrix} * \begin{bmatrix} x \\ y \\ 1 \end{bmatrix}$$ [8].

This leads to the following equations:

$$u = a * x + b * y \text{ and } v = a * y - b * x.$$ [9].

For the parameters a and b results:

$$a = (v*y + u*x) / (x*x + y*y) \text{ and } b = (v*x - u*y) / (x*x + y*y).$$ [10].

If the parameters a and b are known, the second and third transformation matrices [R] and [S] can be build.
The scale factor calculated uses the formula:

$$(11) \quad S = \sqrt{a^2 + b^2} \; .$$

Using the parameter S it can be also calculated:

$$(12) \quad \cos(\theta) = a / S \text{ and } \sin(\theta) = b / S$$

Thereby all components of the transformation matrix $[M_T]$ are known. Totally six parameters are needed to defined completely all components of the transformation matrix $[M_T]$. The six parameters are: the parameters a and b for the second and third transformation matrices [R] and [S], the coordinates $A_1X$ and $A_1Y$ for the first transformation matrix $[T_1]$ and the coordinates $A_2X$ and $A_2Y$ for the fourth transformation matrix $[T_2]$. These six parameters are transmitted to the user interface for further data processing.
Using the abovementioned six parameters, the user interface can rebuild the four transformation matrices $[T_2]$, [R], [S], $[T_1]$. Since objects inside the user interface are usually positioned on the scene with their own transformation matrix, as it is known from Flash or HTML5 etc., translation, rotation and scaling of these objects can be achieved with multiplication of the object's matrix with a combination or all of the four transformation matrices $[T_2]$, [R], [S] ,$[T_1]$, according to a specified user interface behaviour.
For example:

- the product $[T_1]^{-1} * [R] *[T_1]$ is for rotation only,
- the product $[T_1]^{-1} *[S] *[T_1]$ is for scaling only,
- the product $[T_2] *[T_1]$ is for translation only,
- the product $[T_1]^{-1}*[R]*[S]*[T_1]$ is for rotation and scaling,
- the product $[T_2] * [S]*[T_1]$ is for translation and scaling,
- the product $[T_2] * [R]* [T_1]$ is for translation and rotation, and
- the product $[T_2] * [R] * [S]* [T_1]$ is for translation , rotation and scaling

The method can be also adapted for three or more simultaneous touch inputs, e.g. by three fingers, whereby touch inputs with three or more fingers are not described as line segments but as form segments. The calculation needs to be performed equivalent to the above calculation.

With the method a user's touch input is processed as a definition of a two dimensional transformation matrix in contrast to a processing as a gesture as known from the prior art. This allows a correct recognition of the touch input, e.g. the display device can correctly detect whether the user rotates or zooms etc. Further the calculation can be preformed in an easy and convenient way and is applicable for many different user interfaces.

**List of References**

C      coordinate system

P1     first position

P2     second position

S1     first segment

S2     second segment

x      abscissa

y      ordinate

**Claims**

1.   Method for controlling a touch sensitive display device, whereby a touch input of a user is detected and/or processed, **characterized in that** at least a first position ($P_1$) and a second position ($P_2$) of segments ($S_1$, $S_2$) are detected sequentially, whereby a geometrical transformation in a coordinate system (C) is determined, by which the first position ($P_1$) of a first segment ($S_1$) is imaged on the second position ($P_2$) of a second segment ($S_2$), and whereby the geometrical transformation is transmitted to a user interface.

2.   Method according to claim 1, **characterized in that** the geometrical transformation is decomposed in a product of at least four transformation matrices ($[T_1]$, $[R]$, $[S]$, $[T_2]$).

3.   Method according to claim 2, **characterized in that** a first transformation matrix ($[T_1]$) is a first translation matrix which is applied to the first segment ($S_1$).

4.   Method according to claim 3, **characterized in that** the first segment ($S_1$) is translated to a coordinate origin of the coordinate system (C).

5.   Method according to claim 4, **characterized in that** a second transformation matrix ($[R]$) is a rotation matrix which is applied to the translated first segment ($S_1$).

6.   Method according to claim 5, **characterized in that** the translated first segment ($[S_1]$) is rotated.

7.   Method according to claim 6, **characterized in that** a third transformation matrix ($[S]$) is a scale matrix which is applied to the rotated first segment ($S_1$).

8.   Method according to claim 7, **characterized in that** the rotated first segment ($S_1$) is scaled.

9.   Method according to claim 8, **characterized in that** a fourth transformation matrix ($[T_2]$) is a second translation matrix which is applied to the

scaled first segment ($S_1$).

10. Method according to claim 9,
    **characterized in that** the scaled first segment ($S_1$) is translated.

FIG 1

FIG 2

EP 2 590 065 A1

**EUROPEAN SEARCH REPORT**

Application Number

EP 12 15 2323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Tomer Moscovich: "Principles and Applications of Multi-touch Interaction, 3.2, Multi-finger Cursors", Dissertation submitted in partial fullfillment of the requirements for the Degree of Doctor of Philosophy in the Department of Computer Science at Brown University, 1 May 2007 (2007-05-01), pages 30-52, XP055048569, Retrieved from the Internet: URL:http://www.moscovich.net/tomer/papers/moscovich_dissertation.pdf [retrieved on 2013-01-02] * page 30 * * page 37 - page 40 * ----- | 1-10 | INV. G06F3/0488 |
| A | US 6 243 096 B1 (TAKANASHI NOBUAKI [JP]) 5 June 2001 (2001-06-05) * column 12 - column 14 * ----- | 1-10 | |

TECHNICAL FIELDS SEARCHED (IPC)

G06F

The present search report has been drawn up for all claims

| Place of search | Date of completion of the search | Examiner |
|---|---|---|
| Berlin | 3 January 2013 | Reise, Berit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10

**ANNEX TO THE EUROPEAN SEARCH REPORT**
**ON EUROPEAN PATENT APPLICATION NO.**                    EP 12 15 2323

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2013

| Patent document cited in search report | | Publication date | Patent family member(s) | | Publication date |
|---|---|---|---|---|---|
| US 6243096 | B1 | 05-06-2001 | JP | 2985847 B2 | 06-12-1999 |
| | | | JP | 11120384 A | 30-04-1999 |
| | | | US | 6243096 B1 | 05-06-2001 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080165255 A1